Europäisches Patentamt

European Patent Office

Office européen des brevets

(11) Numéro de publication: **0 248 712 B1**

# FASCICULE DE BREVET EUROPEEN

(45) Date de publication de fascicule du brevet:
23.10.91

(21) Numéro de dépôt: 87401188.5

(22) Date de dépôt: 26.05.87

(51) Int. Cl.⁵: **G07F 7/10**, G06F 1/00,
H03M 11/00

(54) **Unité de clavier de sécurité, en particulier pour la composition d'un code confidentiel.**

(30) Priorité: 02.06.86 FR 8607901

(43) Date de publication de la demande:
09.12.87 Bulletin 87/50

(45) Mention de la délivrance du brevet:
23.10.91 Bulletin 91/43

(84) Etats contractants désignés:
BE CH DE ES GB IT LI LU NL

(56) Documents cités:
WO-A-85/00713
FR-A- 2 401 459
US-A- 3 973 256
US-A- 4 145 687
US-A- 4 584 665

IBM TECHNICAL DISCLOSURE BULLETIN, vol.
20, no. 6, novembre 1977, pages 2282-2284,
New York, US; C.A. HARRING: "Keyboard with
integral pin pad attachment"

IBM TECHNICAL DISCLOSURE BULLETIN, vol.
26, no. 5, octobre 1983, pages 2393-2397,
New York, US; G.G. PAPAS: "Encryption pin
pad"

IBM TECHNICAL DISCLOSURE BULLETIN, vol.
16, no. 7, décembre 1973, pages 2312-2314,
New York, US; G.F. NIELSEN: "Remote terminal - computer communication security system"

(73) Titulaire: **ELECTRONIQUE SERGE DASSAULT**
**55, quai Marcel Dassault**
**F-92214 Saint-Cloud(FR)**

(72) Inventeur: **Soupirot, Joel**
**Quartier Monvallier St-George les Bains**
**F-07800 La Voulte(FR)**

(74) Mandataire: **Plaçais, Jean-Yves et al**
**Cabinet Netter, 40, rue Vignon**
**F-75009 Paris(FR)**

## Description

L'invention concerne les appareils électroniques utilisant un clavier, plus particulièrement les appareils de paiement électronique, que l'on appelle aussi terminaux de point de vente, ou terminaux d'encaissement.

Ces appareils sont installés chez les commerçants, pour permettre d'automatiser les transactions par carte de paiement.Pour ce qui le concerne, le client peut ratifier la transaction par sa signature, ou bien par la composition de son code confidentiel, sur un petit appareil séparé, dénommé boîtier client.

Des précautions poussées sont prises pour conserver la confidentialité de ce code:

- ou bien il est vérifié sur place, par des moyens de contrôle appropriés incorporés au boîtier du client; aucune transmission du code confidentiel lui-même en dehors du boîtier client n'est alors requise;
- ou bien ce code est vérifié dans un ordinateur central, auquel cas il ne sort du boîtier client qu'après avoir subi un chiffrement, qui le rend pratiquement indécryptable.

Ces deux fonctions sont maintenant assurées par un circuit intégré hybride, protégé de résine, qui fait partie du boîtier client. Bien entendu, les moyens de contrôle ou de chiffrement utilisés par ce circuit sont tenus secrets.

Ainsi, un degré de sécurité élevée est atteint.

Cependant, la Demanderesse a observé que des personnes malveillantes pourraient tenter d'intercepter un code confidentiel au moment où il passe du clavier au circuit intégré protégé.

Plus généralement, le même risque existe chaque fois qu'une unité électronique comprend un clavier, relié à des moyens propres à l'analyse matricielle du clavier par ligne et colonne. En effet, la connaissance de la forme d'onde des signaux d'analyse du clavier permet de remonter immédiatement à toute information confidentielle frappée sur le clavier. Il suffit pour cela de quelques branchements réalisés sur les lignes et colonnes de la matrice du clavier, les informations elles-mêmes pouvant être transmises par exemple à travers un câble de transmission dont est équipée l'unité à clavier, ou encore par tous autres moyens de transmisson, radioélectriques notamment. Par contre, les signaux circulant à l'intérieur du circuit d'analyse du clavier sont relativement complexes. Ceci rend difficile leur utilisation pour retrouver l'information confidentielle frappée au clavier. De ce fait, on appellera ci-après génériquement "module protégé" le circuit d'analyse du clavier, qu'il soit ou non enrobé d'une résine interdisant tout accès physique à ces bornes ou connexions d'entrée-sortie.

La présente invention a essentiellement pour but d'améliorer la sécurité d'une unité à clavier telle que définie ci-dessus.

L'objet des revendications 1 et 12 permet d'atteindre ce but.

L'invention s'applique ainsi à une unité à clavier de sécurité, en particulier pour la composition d'un code confidentiel, du type dans lequel un boîtier, muni d'un clavier propre à l'analyse matricielle par ligne et colonne, enferme un module protégé, comportant par exemple un microprocesseur et des moyens de mémoire, et capable d'appliquer des impulsions d'interrogation à chacune des lignes du clavier, tout en scrutant les colonnes du clavier, une touche enfoncée produisant un contact ligne-colonne spécifique (voir par exemple NO-A-8500713).

Selon l'invention, le module protégé est muni de liaisons bidirectionnelles vers certaines au moins des colonnes et lignes du clavier, et il comporte des moyens pour simuler de faux actionnements de touches, certaines au moins des impulsions d'interrogation étant appliquées en même temps à au moins une ligne et au moins une colonne, ce qui entrave la possibilité d'interception du code confidentiel par espionnage de l'état des lignes et colonnes du clavier.

En effet, par exemple, un tel faux actionnement de touche est indiscernable d'un vrai actionnement de touche, où l'impulsion d'interrogation est appliquée seulement à une ligne du clavier, et où l'on observe laquelle des colonnes du clavier se voit transférer l'impulsion d'interrogation, du fait de l'établissement d'un contact par enfoncement de la touche concernée.

Selon une variante de l'invention, la simulation de faux actionnements de touches est systématique.

En ce sens, le module protégé applique chacune des impulsions d'interrogation à au moins une ligne et au moins une colonne, de manière variable; il effectue la véritable exploration du clavier, touche par touche, en scrutant à chaque fois une ligne ou colonne dite "effectivement analysée", qui ne reçoit pas l'impulsion d'interrogation (en provenance directe du module protégé).

Selon une autre variante de l'invention, le module protégé n'effectue aucune vraie interrogation d'une touche choisie, pendant un temps prédéterminé correspondant au temps normal d'actionnement d'une touche, et il engendre pendant le même temps une fausse réponse attribuable à cette touche choisie. Avantageusement, cette touche choisie est définie de manière sensiblement aléatoire.

Ceci constitue un second niveau de simulation de faux actionnements de touches, qui rend encore plus difficile l'interception du code confidentiel par espionnage de l'état de lignes et colonnes du clavier.

Selon une autre variante avantageuse de l'invention, lorsqu'il se trouve en présence d'un non-transfert du début de l'impulsion d'interrogation sur la colonne ou ligne analysée (tel que définie plus haut), non-transfert qui signifie un non actionnement d'une ou plusieurs touches explorées, le module protégé répond à cette condition en appliquant à la colonne ou ligne analysée une impulsion factice qui se termine avec l'impulsion d'interrogation, son début étant par contre légèrement retardé par rapport au début de l'impulsion d'interrogation, compte tenu du temps de décision nécessaire au module protégé.

On considérera maintenant deux modes de réalisation.

Dans le premier, le module protégé est muni de liaisons bidirectionnelles vers toutes les colonnes du clavier. Ce module protégé possède un état de simulation pure, où il applique l'impulsion d'interrogation à une ligne et à toutes les colonnes du clavier (peuvent ainsi être simulées les différentes touches correspondant à cette ligne et aux différentes colonnes); pour la vraie exploration du clavier, le module protégé applique l'impulsion d'interrogation à une ligne et à toutes les colonnes sauf celle à analyser, la touche effectivement explorée étant définie par la ligne interrogée et la colonne analysée. Bien entendu, en cas de non réponse, on appliquera l'impulsion factice comme défini plus haut.

De même, pendant une temps correspondant au temps normal d'actionnement d'une touche, le module protégé s'abstient de toute interrogation d'une touche choisie, en même temps qu'il produit un état de simulation pure applicable à cette touche, ce qui fixe le rang de la ligne correspondante.

En pratique, les touches du clavier qui sont ainsi effectivement explorées ne sont pas traitées dans l'ordre. Il peut être intéressant de définir les touches effectivement explorées de manière sensiblement aléatoire. Le mot "sensiblement" se réfère ici d'une part au fait qu'un tirage au sort parfaitement aléatoire est difficile à obtenir en informatique, d'autre part au fait qu'il y a lieu d'exclure la touche simulée, et, de préférence, des touches interrogées très récemment.

Un autre tempérament au caractère aléatoire de l'exploration du clavier peut être apporté, dans un mode de réalisation particulier, par le fait que le module protégé applique l'impulsion d'interrogation cycliquement aux différentes lignes; dans ces conditions, seule la colonne qui ne reçoit pas l'impulsion d'interrogation est déterminée de manière sensiblement aléatoire.

On s'intéressera maintenant au second mode de réalisation de l'invention. Fonctionnellement, il diffère du premier par le fait que l'analyse d'une touche va maintenant se produire séquentiellement, en déterminant d'abord la ligne, puis la colonne à laquelle appartient la touche, ou inversement.

Dans ce cas, le module protégé est muni de liaisons bidirectionnelles aussi bien pour les lignes que pour les colonnes du clavier; dans son état de simulation pure, ce module protégé applique simultanément l'impulsion d'interrogation à toutes les lignes et toutes les colonnes du clavier (la touche simulée est alors définie simplement par le fait que l'on s'abstiendra de toute vraie interrogation à son égard pendant le temps prédéterminé); pour la vraie exploration, le module protégé applique l'impulsion d'interrogation d'une part à toutes les lignes et colonnes sauf une ligne analysée, d'autre part à toutes les lignes et colonnes sauf une colonne analysée, la touche effectivement explorée étant définie par la ligne et la colonne analysées.

Des aménagements peuvent être apportés au second mode de réalisation défini, en ce sens qu'on peut d'abord analyser la colonne, puis la ligne. Si l'on s'est fixé une touche à analyser, et que la liaison de ligne de cette touche ne répond pas, on peut bien sûr s'abstenir d'analyser la colonne.

En effet, de façon générale, il est avantageux que la touche effectivement explorée soit définie de manière sensiblement aléatoire (avec les mêmes réserves que précédemment quant à la touche simulée, et à l'évitement d'une nouvelle exploration de touches récemment explorées).

Par ailleurs, les lignes et colonnes peuvent être analysées en alternance, ou bien de manière plus désordonnée, en assurant naturellement que l'on puisse analyser l'ensemble des touches du clavier dans un intervalle de temps raisonnablement court.

La présente invention s'exprime également sous la forme d'un procédé pour entraver l'interception d'une information frappée sur un clavier, à destination d'un module de traitement de données. Selon ce procédé, on simule de faux actionnements de touches en appliquant simultanément le même signal d'interrogation à au moins une ligne et au moins une colonne de la matrice d'analyse du clavier, tandis qu'une vraie exploration du clavier est effectuée, touche par touche, en utilisant à chaque fois une ligne ou colonne recevant le signal d'interrogation et, respectivement, une colonne ou ligne effectivement analysée, qui ne reçoit pas l'impulsion d'interrogation. L'actionnement de la touche explorée produit le transfert du signal d'interrogation sur la colonne ou ligne analysée, dont l'état est indiscernable de ceux correspondant aux faux actionnements de touches.

D'autres caractéristiques et avantages de l'invention apparaîtront à la lecture de la description détaillée ci-après, et des dessins annexés, sur lesquels:

- la figure 1 est une vue en perspective montrant un terminal de transaction relié par un câble à une unité de composition de code confidentiel ou "boîtier client";
- la figure 2 est le schéma électrique de principe des circuits contenus à l'intérieur du boîtier client;
- la figure 3 est le schéma de principe d'un clavier à 16 touches;
- la figure 4 est un diagramme temporel rappelant le fonctionnement classique d'un clavier selon la figure 3;
- la figure 5 est un diagramme temporel montrant le fonctionnement du dispositif selon le premier mode de réalisation de l'invention;
- la figure 5A est le schéma de principe de différentes opérations à effectuer au niveau du module protégé pour obtenir le fonctionnement de la figure 5;
- la figure 6 est un diagramme temporel montrant le fonctionnement du dispositif selon l'invention, dans le second mode de réalisation; et
- la figure 6A est le schéma de principe des opérations du module protégé pour obtenir le fonctionnement illustré sur la figure 6.

Les dessins annexés comportent de nombreux éléments de caractère certain. En conséquence, ils sont incorporés à la description non seulement pour permettre de mieux comprendre celle-ci, mais aussi pour servir à la définition de l'invention, le cas échéant.

Par ailleurs, dans la description détaillée ci-après, on considérera seulement le cas d'un terminal de transaction bancaire, étant observé que l'application de l'invention peut être plus générale.

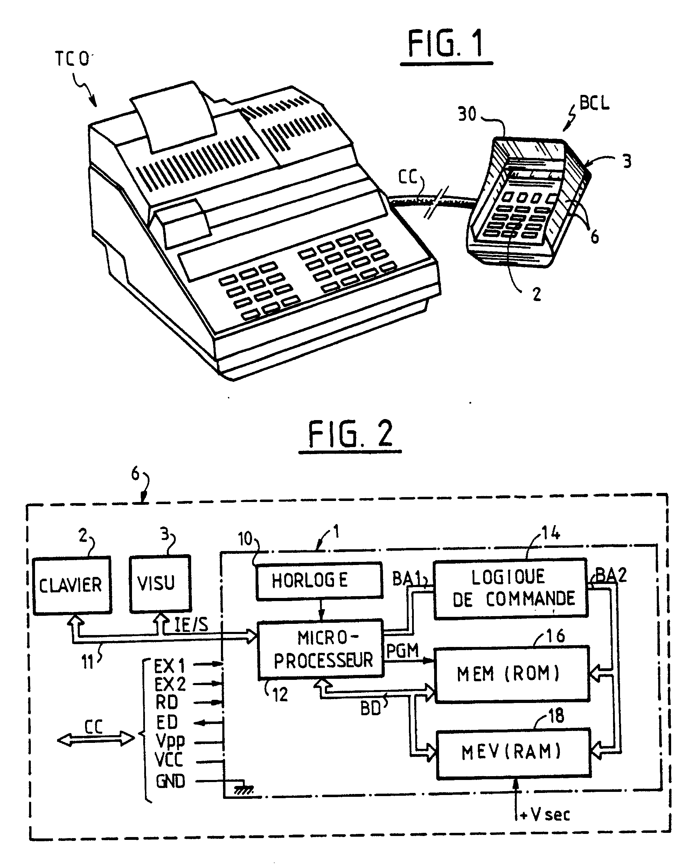

Sur la figure 1, la référence TCO désigne un terminal de transaction, qui peut être un terminal de paiement électronique (série E200 vendue par la Demanderesse), ou bien un terminal d'encaissement multi-commerces (série E300 vendue également par la Demanderesse).

Ce terminal est relié par un câble de connexion CC à un boîtier client BCL, dont le boîtier proprement dit 6 est surmonté d'un abri 30, propre à dissimuler aux regards indiscrets un clavier 2 et une visualisation 3.

Sur le schéma électrique de la figure 2, on retrouve en 6 les limites extérieures du boîtier. Le module protégé 1, qui est un circuit intégré hybride, comporte une horloge 10 reliée à un microprocesseur 12. Le bus d'adresse BA1 de celui-ci traverse une logique de commande 14 pour venir en Ba2 vers une mémoire morte 16 (MEM ou ROM), ainsi qu'une mémoire vive 18 (MEV ou RAM).

Le câble de connexion CC est la seule liaison électrique qui traverse la paroi 6 du boîtier. Il comprend par exemple une liaison d'alimentation DCC, une liaison de masse GMB, une tension d'alimentation sauvegardée ou secourue notée VSec. Celle-ci sert à l'alimentation de la mémoire vive 18, qui contient les données secrètes propres soit au contrôle in situ du code confidentiel, soit au chiffrement de celui-ci pour transmission à distance, en un poste où ce code confidentiel pourra être contrôlé.

Le module protégé comprend encore un bus de données BD, pour ses échanges avec les mémoires 16 et 18, ainsi qu'une liaison de demande de programme PGM, vers la mémoire morte 16.

Suivant les besoins, d'autres connexions peuvent passer par le câble CC, à savoir des signaux EX1, EX2, (commandes d'échanges entre les microprocesseurs des organes TCO et BCL), les signaux RD et ED (gestion du sens de la liaison série) et le signal VPP.

Les liaisons électriques entre le clavier 2 et le module protégé 1, qui ne passent pas par une interface standard, comportent, sous forme matricielle, des liaisons dites "lignes" et des liaisons dites "colonnes".

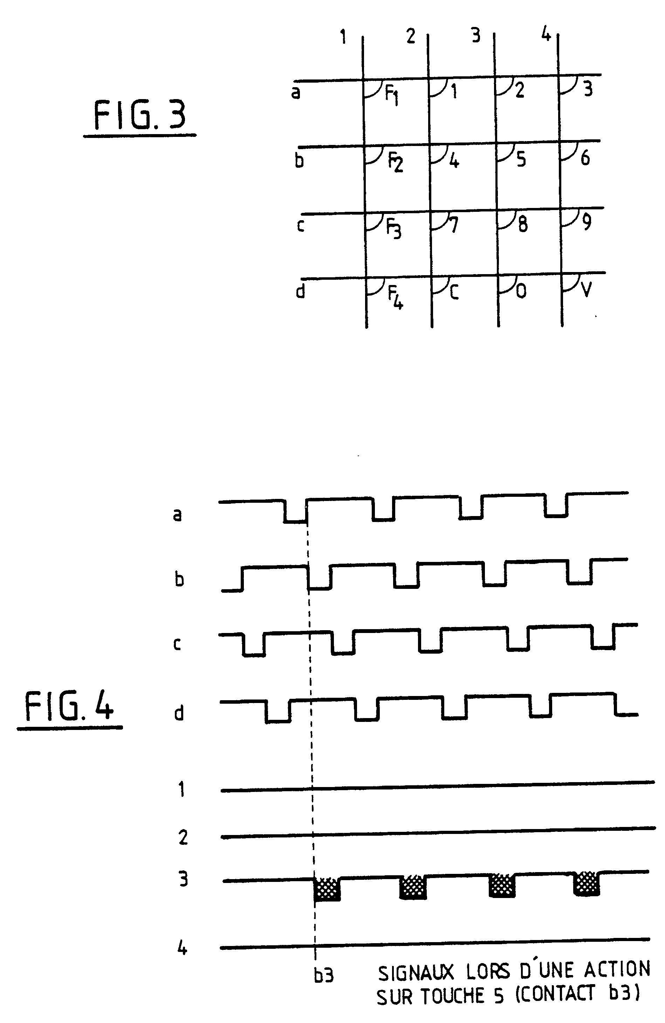

La figure 3 illustre un mode de réalisation particulier du clavier à 16 touches illustré en 2 sur la figure 1.

On y distingue les lignes a à d et les colonnes 1 à 4. Bien entendu, le rôle des lignes et colonnes est conventionnel, et peut être inversé.

La figure 3 montre aussi la correspondance entre chaque couple d'informations ligne et colonne et chacune des touches du clavier. On peut ainsi définir quatre touches de fonction F1 à F4, dix touches numériques 0 à 9, une touche d'effacement C, et une touche de virgule V.

La figure 4 illustre l'analyse classique d'un clavier de ce type. Des impulsions d'interrogation périodiques sont appliquées séquentiellement et de manière décalée aux lignes a à d. On examine à chaque fois la réponse des colonnes 1 à 4. Dans l'exemple représenté, c'est la colonne 3 qui répond, en synchronisme de l'application de l'impulsion d'interrogation à la ligne b. C'est donc la touche b3 (chiffre 5) qui est actionnée. L'explication est la suivante : au moment de l'enfoncement de la touche 5, un contact est établi entre la ligne b et la colonne 3. L'impulsion d'interrogation appliquée à la ligne b est alors transférée sur la colonne 3. Ceci permet au module protégé de savoir quelle est la touche actionnée. Par la suite, on marquera systématiquement de hachures croisées une impulsion d'interrogation ainsi transférée entre une ligne et une colonne (ou inversement).

L'homme de l'art comprendra qu'il est très facile, en branchant des fils en parallèle sur les lignes et colonnes du clavier, et en enregistrant les signaux qui s'y trouvent présents, de retrouver le code frappé sur le clavier.

Il est bien sûr possible de réduire l'accès physique aux liaisons entre le module protégé et le clavier. Néanmoins, aussi courtes et peu accessibles qu'elles soient, ces liaisons peuvent toujours faire l'objet de branchements visant à l'espionnage du clavier.

Une fois que le branchement a été fait, les informations recueillies peuvent être transmises à distance soit à travers le câble de transmission CC, soit par tout autre moyen, notamment des moyens de transmission radioélectrique.

La présente invention a pour but de rendre extrêmement difficile l'utilisation de signaux recueillis sur les lignes et colonnes du clavier aux fins de retrouver le code confidentiel, à moins de disposer d'un équipement extrêmement complexe et évolué.

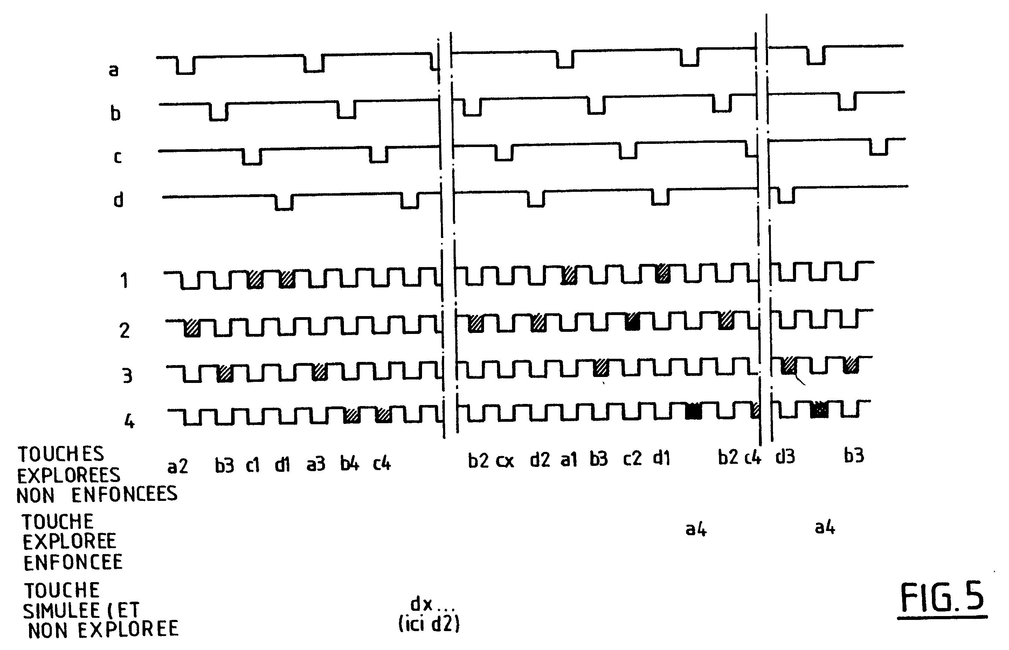

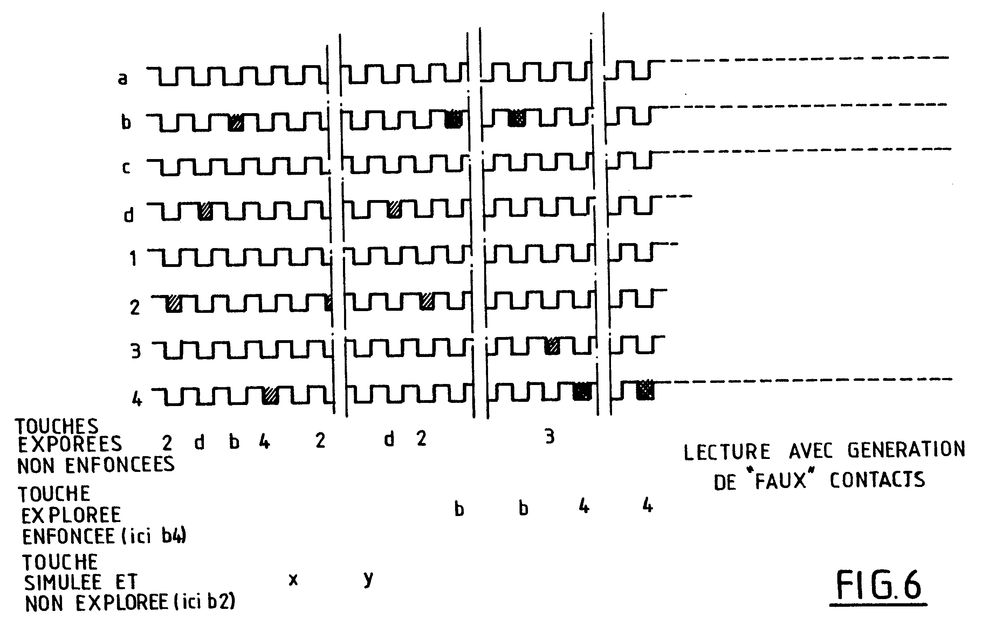

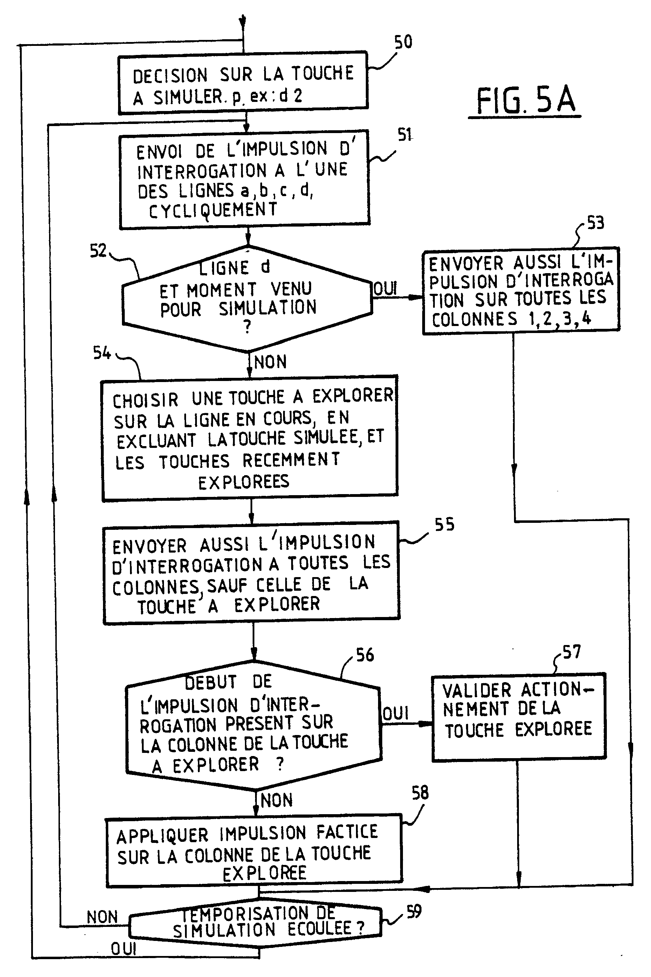

On décrira maintenant le premier mode de réalisation de l'invention en référence aux figures 5 et 5A.

Sur la figure 5, il apparaît que les lignes a à d du clavier sont interrogées séquentiellement, de la même manière que sur la figure 4. Cette interrogation peut se faire de manière directe, à partir du microprocesseur 12, ou bien à travers un décodeur.

De leur côté, les liaisons qui vont du microprocesseur 12 aux colonnes du clavier sont des liaisons bidirectionnelles, qui permettent donc non seulement de détecter si l'impulsion d'interrogation "ligne" est transférée, par actionnement d'une touche, vers l'une des colonnes du clavier, mais aussi d'appliquer directement depuis le microprocesseur 12 l'impulsion d'interrogation à certaines au moins des colonnes du clavier.

La vraie exploration du clavier se produit de la manière suivante :

Pendant la première impulsion sur la ligne a, les colonnes 1, 3 et 4 reçoivent aussi l'impulsion d'interrogation.

Par contre, la colonne 2 ne la reçoit pas. Le microprocesseur 12 en déduit que la touche explorée (a2) n'est pas actionnée. Il applique alors aussitôt sur cette colonne 2 une impulsion factice (marquée par des hachures simples), qui va donc commencer un peu après les impulsions d'interrogation normales, et se terminer avec celles-ci. L'intérêt d'une telle impulsion factice est qu'après une transmission à distance des signaux, il deviendra très difficile de la distinguer des impulsions d'interrogation elles-mêmes.

Pour les impulsions d'interrogation suivantes, les choses se passent de la même manière, mais on change à chaque fois la touche explorée, ce qui permet de déterminer l'état du clavier pour les touches b3, c1, d1, a3, b4 et c4, successivement.

Bien entendu, la cadence d'exploration par les impulsions d'interrogation est choisie suffisamment élevée pour qu'il n'y ait aucun risque de manquer l'actionnement d'une touche par l'opérateur, qui prend typiquement un temps de 0,1 à 0,5 seconde, suivant l'entraînement de l'opérateur.

Après le contrôle de la touche c4, le microprocesseur 12 procède à une pure simulation, consistant à appliquer l'impulsion d'interrogation simultanément à la ligne d et à chacune des colonnes 1 à 4. Ceci peut laisser croire à un fraudeur que l'une des touches d1 à d4 a été actionnée. Une telle simulation est répétée pendant un temps égal ou légèrement inférieur au temps normal d'actionnement d'une touche (par exemple 0,1 à 0,5 seconde). Ce temps peut être prédéterminé, ou bien ajusté par le microprocesseur en fonction de données telles que la rapidité de frappe de l'opérateur en face duquel il se trouve.

Pendant le même temps, le microprocesseur 12 s'abstient de toute interrogation d'une touche choisie, par exemple la touche d2, de telle sorte que le fraudeur soit amené à croire que la touche d2 est effectivement actionnée. La figure 5 présente après cela une coupure, qui correspond précisément au temps prédéterminé ainsi défini. Ensuite, on procède par exemple à l'analyse de la touche b2, qui ne répond pas (d'où une impulsion factice) à une simulation sur l'une des touches cx (x désignant ici l'une des colonnes 1 à 4), puis à l'analyse d'autres touches d2, a1, b3, c2, d1.

Après cela, on a illustré un vrai actionnement de la touche a4. Le microproceseur 12 a appliqué l'impulsion d'interrogation à la ligne a, et aux colonnes 1 à 3. Mais l'impulsion d'interrogation apparaît aussi sur la colonne 4, du fait de l'enfoncement de la touche a4. Si nécessaire, on réitérera peu après le contrôle de la touche a4.

En tout cas, le processus se poursuit avec l'analyse des touches b2, c4, puis ensuite d3, un nouveau contrôle sur la touche a4 qui est vraiment actionnée, puis b3, et ainsi de suite.

Ainsi se trouve réalisée une simulation de faux actionnements de touches, à deux niveaux :

- lors d'un faux actionnement de touches, où toutes les colonnes reçoivent l'impulsion d'interrogation (cas dx), on obtient sur les lignes et colonnes du clavier des états indiscernables d'un vrai actionnement de touche (cas a4),

- en omettant d'explorer une touche choisie, par exemple tirée au sort (en évitant naturellement une touche effectivement en cours d'actionnement), on fait croire à un fraudeur que c'est la touche choisie qui est actionnée, ce qui n'est pas le cas.

De plus, pour accéder à cette information, le fraudeur devra d'abord être en mesure de déterminer toutes les impulsions factices, ce qui est très délicat, car il y a lieu alors de détecter sans erreur des décalages de signaux de quelques microsecondes, et ce à l'extrémité d'un câble de 2 à 3 mètres minimum.

En admettant même qu'il arrive ainsi à repérer l'ensemble des faux codes correspondant à des touches simulées et des vrais codes correspondant à des touches effectivement enfoncées, le fraudeur devra de plus limiter l'enregistrement de ces données à la période réelle de frappe du code confidentiel, et essayer ensuite les différents codes possibles, compte tenu du mélange de vraies frappes de touches et de frappes de touches simulées.

Il est alors relativement aisé d'engendrer suffisamment de touches simulées pour que le nombre de codes possibles que doit essayer le fraudeur dépasse le nombre d'erreurs que toléreront les cartes bancaires.

Il est avantageux de rendre aléatoire (autant que possible) l'ensemble des processus suivis par le microprocesseur.

Dans ce mode de réalisation, la séquence d'application des impulsions d'interrogation aux lignes du clavier demeure fixe et périodique comme selon la technique antérieure. On peut bien entendu procéder différemment.

Par contre, peuvent être rendus sensiblement aléatoires :

- le choix, à chaque fois, de la colonne à laquelle on ne va pas appliquer l'impulsion d'interrogation. On exclura bien entendu du tirage au sort la touche "simulée". Il peut aussi être souhaitable d'éviter d'interroger à nouveau une touche déjà explorée récemment.
- La production de la simulation, c'est-à-dire les instants d'application simultanée de l'impulsion d'interrogation à l'une des lignes et à toutes les colonnes.

La figure 5A illustre, à titre d'exemple, un enchaînement d'opérations réalisables par le microprocesseur 12 pour la mise en oeuvre du premier mode de réalisation de l'invention.

L'étape 50 consiste à décider quelle est la touche que l'on va simuler, ici la touche d2.

L'étape 51 consiste à envoyer l'impulsion d'interrogation à l'une des lignes a, b, c, d, par exemple de la manière cyclique décrite.

L'étape 52 détermine alors si l'on est en train d'interroger la ligne d (qui correspond à la touche à simuler), et si le moment est venu d'effectuer une simulation. Ce moment peut être déterminé par un tirage au sort et l'usage d'un compteur de temps.

Si oui, l'étape 53 consiste à envoyer l'impulsion d'interrogation (présente sur la ligne d) sur toutes les colonnes 1, 2, 3, 4.

Sinon, l'étape 54 consiste à choisir une touche à explorer sur la ligne en cours, en excluant la touche simulée, et le cas échéant les touches récemment explorées.

L'étape 55 détermine alors que l'on envoie aussi l'impulsion d'interrogation à toutes les colonnes, sauf celles de la touche à explorer (en pratique, c'est l'étape 55 qui déterminera l'envoi de l'impulsion d'interrogation en même temps à la ligne concernée et à toutes les colonnes sauf une).

L'étape 56 consiste à déterminer si le début de l'impulsion d'interrogation est présent sur la colonne de la touche à explorer. La réponse oui signifie que l'impulsion d'interrogation a été transmise de la ligne à la colonne, et par conséquent que la touche explorée est effectivement enfoncée. L'étape 57 valide alors l'actionnement de la touche explorée.

Dans le cas contraire, l'étape 58 consiste à appliquer une impulsion factice sur la colonne de la touche explorée.

Les sorties des étapes 53, 57 et 58 se retrouvent à l'entrée d'un test 59 qui détermine si la temporisation de la simulation est écoulée. Si cette condition n'est pas vérifiée, on retourne à l'étape 51. Dans le cas contraire, on retourne à l'étape 50, pour décider d'une nouvelle touche à simuler.

Les fonctions de la figure 5A sont aisément réalisables à l'aide d'un microprocesseur propre à entretenir plusieurs compteurs de temps, à engendrer des quantités aléatoires (ou plus exactement pseudo-aléatoires) et munis d'une interface convenable pour la production d'impulsions électriques à la cadence requise.

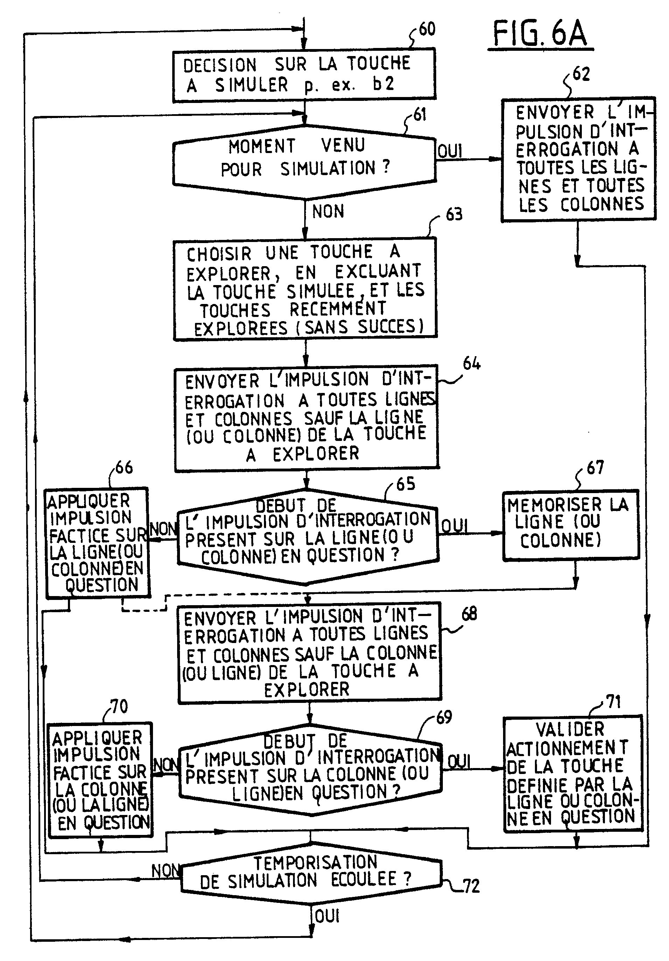

La figure 6 illustre le second mode de réalisation de l'invention.

Il diffère du précédent tout d'abord par le fait que toutes les liaisons entre le microprocesseur 12 et le clavier sont bidirectionnelles. On pourra alors appliquer l'impulsion d'interrogation indifféremment aux lignes et colonnes, et, de même, scruter le transfert de l'impulsion d'interrogation sur toute ligne ou colonne.

L'intérêt est que l'on augmente alors considérablement le nombre de combinaisons possibles.

En contrepartie, l'exploration d'une touche va se faire en deux temps, d'abord par la ligne, ensuite par la colonne à laquelle elle appartient, ou inversement. Il faut donc générer plus de séquences de signaux d'interrogation dans le même temps, afin de ne pas perdre d'informations sur l'état réel du clavier.

Sur la figure 6, on observe tout d'abord que l'impulsion d'interrogation est appliquée à toutes les lignes a à d ainsi qu'aux colonnes 1, 3 et 4. Rien n'apparaissant sur la colonne 2, le microprocesseur 12 lui applique aussitôt une impulsion factice.

Ensuite, il fait de même, successivement, avec la ligne d, la ligne b, la colonne 4. Dans tous les cas, rien ne se produit et une impulsion factice est appliquée.

Aussitôt après, le microprocesseur produit un état de simulation pure, comme précédemment. La différence réside cependant en ce que l'impulsion d'interrogation est maintenant appliquée à toutes les lignes et colonnes.

L'instant d'après, c'est à nouveau la colonne 2 qui est explorée.

On supposera que, jusqu'à présent, le microprocesseur avait choisi de simuler un faux actionnement de la touche b2, en s'abstenant donc de toute interrogation susceptible de correspondre à cette touche. Le fraudeur aura donc naturellement tendance à attribuer l'état de simulation pure (noté x) à la touche b2. Comme précédemment, ceci se produit pendant un temps prédéterminé, éventuellement ajusté par le microprocesseur.

Après la première coupure de la figure 6, on retrouve un état de simulation pure, noté y puis l'exploration de la ligne d, de la colonne 2.

Ensuite, on se trouve en présence d'un véritable actionnement de la ligne b.

Après l'interruption qui suit dans la représentation des signaux, on retrouve à nouveau un actionnement de l'une des touches correspondant à la ligne b.

Ensuite, l'interrogation de la colonne 3 ne donne aucun résultat, d'où la production d'une impulsion factice.

Après cela, on obtient un véritable actionnement pour l'une des touches de la colonne 4, condition qui se manifeste à nouveau après la dernière interruption dans la représentation des signaux que présente la figure 6.

Sous réserve que les réponses sur la ligne b et la colonne 4 soient suffisamment rapprochées dans le temps, le microprocesseur en déduit que la touche b4 a été actionnée par l'utilisateur.

Par contre, le fraudeur n'est pas en mesure de faire la différence entre les conditions dans lesquelles l'impulsion d'interrogation est présente sur toutes les lignes et colonnes par suite de l'actionnement de cette touche b4, d'une part, et les conditions dans lesquelles l'impulsion d'interrogation est présente sur toutes les lignes et colonnes du fait d'un état de simulation pure au niveau du microprocesseur, d'autre part.

De plus, et comme précédemment, la "non-interrogation" d'une touche simulée tendra à faire croire à une fraudeur que cette touche a été actionnée.

Avec ce second mode de réalisation, les difficultés que rencontrera le fraudeur pour accéder véritablement au code confidentiel sont a priori les mêmes que précédemment. Mais sa tâche est rendue encore plus complexe du fait de la décomposition en deux étapes de l'exploration des touches. On remarquera également que le fraudeur ne dispose plus d'aucune information sur les états de simulation pure, alors que précédemment il connaissait la ligne dont il s'agissait.

Bien entendu, on pourra comme précédemment rendre aléatoire la détermination de la ligne ou colonne à laquelle l'impulsion d'interrogation n'est pas appliquée, en évitant bien sûr la touche simulée, et éventuellement des interrogations trop rapprochées susceptibles de correspondre à une même touche.

Peuvent également être rendus aléatoires les temps auxquels seront produits les états de simulation pure, et la détermination de la touche simulée, que l'on va s'abstenir d'explorer pour faire croire qu'elle est véritablement actionnée.

Le second mode de réalisation de l'invention peut être mis en oeuvre en faisant exécuter par le microprocesseur 12 la suite d'opérations illustrées sur la figure 6A.

La première opération 60 est une décision sur la touche à simuler, ici la touche b2.

Le test 61 détermine si le moment est venu d'effectuer la simulation. Si oui, l'étape 62 envoie l'impulsion d'interrogation à toutes les lignes et toutes les colonnes.

Dans le cas contraire, l'étape 63 consiste à choisir une touche à explorer véritablement, en excluant naturellement la touche simulée, et si on le souhaite les touches récemment explorées (sans succès).

L'étape 64 consiste alors à envoyer l'impulsion d'interrogation à toutes les lignes et colonnes sauf la ligne (ou colonne) de la touche à explorer.

L'étape 65 détermine si le début de l'impulsion d'interrogation est présent sur la ligne (ou colonne) en question. Si elle ne l'est pas, l'étape 66 applique une impulsion factice sur la ligne et/ou colonne en question.

Si au contraire l'impulsion d'interrogation est présente, l'étape 67 consiste à mémoriser la ligne (ou colonne) dont il s'agit.

Après l'étape 67, on passe à l'étape 68. La sortie de l'étape 66 pourrait être également un passage par l'étape 68, ou plus simplement un saut direct à l'étape 72.

L'étape 68 consiste à envoyer l'impulsion d'interrogation à toutes les lignes et colonnes sauf la colonne (ou ligne) de la touche à explorer.

Le test 69 consiste à déterminer si le début de l'impulsion d'interrogation est présent sur la colonne (ou ligne) en question. Sinon, l'étape 70 consiste à appliquer l'impulsion factice sur la colonne (ou ligne) en question.

Si oui, l'étape 71 consiste à valider l'actionnement de la touche définie par la ligne et la colonne en question, compte tenu des informations mémorisées en 67.

L'illustration donnée sur la figure 6A, de même que l'explication ci-dessus, conserve la symétrie entre la ligne et la colonne, étant observé qu'on devra toujours disposer d'une information de ligne puis d'une information de colonne pour déterminer l'actionnement d'une touche. Cependant, l'ordre dans lequel on obtient les deux informations est indifférent. De plus, comme illustré sur la figure 6, il n'est pas nécessaire que l'on ait systématiquement une alternance entre lignes et colonnes. Cela peut néanmoins être intéressant, pour simplifier le travail du microprocesseur 12.

Les sorties des étapes 62, 66, 70 et 71 vont vers un test 72 qui détermine si la temporisation de simulation est écoulée.

Si elle ne l'est pas, on retourne à l'étape 61. Si par contre cette temporisation est écoulée, on remonte jusqu'à l'étape 60, pour décider d'une nouvelle touche à simuler.

Comme précédemment, il est estimé que le microprocesseur 12 peut aisément réaliser les fonctions de la figure 6A, avec des compteurs de temps des horloges et une interface convenable pour la production et l'analyse des impulsions d'interrogation.

On considérera maintenant de manière indifférente les deux modes de réalisation de l'invention.

Bien entendu, il est nécessaire que la cadence des impulsions d'interrogation soit suffisante pour permettre une interrogation complète de toutes les touches du clavier, compte tenu de la composante aléatoire précitée, dans un temps qui corresponde au temps normalement pris par un opérateur pour frapper son code confidentiel.

Il est clair que la présente invention offre une solution particulièrement intéressante, pour préserver la confidentialité d'informations frappées sur un clavier, et en particulier un code confidentiel de carte bancaire.

Avec les moyens décrits, il devient en effet possible de simplifier considérablement, sinon supprimer, les autres protections physiques qui ont pu être envisagées par ailleurs.

L'homme de l'art pourra concevoir différentes variantes des modes de réalisation décrits. Bien entendu, la présente invention s'étend à toutes ces variantes, dans la mesure où elles sont couvertes par les revendications ci-après.

**Revendications**

1.  Unité à clavier de sécurité, en particulier pour la composition d'un code confidentiel, du type dans lequel un boîtier (BCL), muni d'un clavier (2) propre à l'analyse matricielle par lignes et colonnes, enferme un module protégé (1) capable d'appliquer des impulsions *prédéfinies* à chacune des lignes du clavier, tout en scrutant les colonnes du clavier, une touche enfoncée produisant un contact ligne-colonne spécifique, *et le transfert d'impulsion vers la colonne correspondante,*

    caractérisée en ce que le module protégé (1) est muni de liaisons bidirectionnelles (11) vers certaines au moins des colonnes et lignes du clavier, et en ce qu'il comporte des moyens pour simuler de faux actionnements de touche, certaines au moins des impulsions *prédéfinies, simulatrices,* étant appliquées en même temps à au moins une ligne (a-d) et au moins une colonne (1-4), ce qui entrave la possibilité d'interception du code confidentiel par espionnage de l'état des lignes et colonnes du clavier.

2.  Unité selon la revendication 1, caractérisée en ce que le module protégé (1) applique chacune des impulsions *prédéfinies* à au moins une ligne (a-d) et au moins une colonne (1-4), de manière variable, et en ce qu'il effectue la *vraie interrogation* du clavier, touche par touche, *en* scrutant à chaque fois une colonne ou ligne effectivement analysée, *à laquelle il n'applique pas d'impulsions prédéfinies*

3.  Unité selon la revendication 2, caractérisée en ce que le module protégé (1) n'effectue aucune vraie interrogation d'une touche choisie, pendant un temps prédéterminé correspondant au temps normal d'actionnement d'une touche, et en ce qu'il engendre, pendant le même temps, une fausse réponse attribuable à cette touche choisie, *des impulsions simulatrices étant appliquées en même temps à la ligne et à la colonne correspondant à cette touche.*

4.  Unité selon la revendication 3, caractérisée en ce que la touche choisie est définie de manière sensiblement aléatoire.

5.  Unité selon l'une des revendications 2 à 4, caractérisée en ce que le module protégé (1) répond au non-transfert du début de l'impulsion *prédéfinie de vraie* interrogation sur la colonne ou ligne analysée, signifiant le non-actionnement d'une ou plusieurs touches explorées, en appliquant à cette colonne ou ligne une impulsion simuletrice qui se termine avec l'impulsion *prédéfinie.*

6.  Unité selon l'une des revendications 2 à 5, caractérisée en ce que le module protégé (1) est muni de liaisons bidirectionnelles vers toutes les colonnes du clavier,

en ce que, dans un état de simulation pure, le module protégé applique l'impulsion *prédéfinie* à une ligne et à toutes les colonnes du clavier,

et en ce que, pour la vraie *interrogation* , le module protégé applique l'impulsion *prédéfinie* à une ligne et à toutes les colonnes sauf celle à analyser, la touche effectivement explorée étant définie par la ligne interrogée et la colonne analysée.

7. Unité selon la revendication 6, caractérisée en ce que la touche effectivement *interrogée* est définie de manière sensiblement aléatoire.

8. Unité selon la revendication 6, caractérisée en ce que le module protégé (1) applique l'impulsion *prédéterminée* cycliquement aux différentes lignes, tandis que la colonne qui ne reçoit pas l'impulsion *prédéterminée* est déterminée de manière sensiblement aléatoire.

9. Unité selon l'une des revendications 2 à 5, caractérisée en ce que le module protégé (1) est muni de liaisons bidirectionnelles aussi bien pour les lignes que pour les colonnes du clavier,

en ce que, dans un état de simulation pure, il applique simultanément l'impulsion *prédéterminée* à toutes les lignes et toutes les colonnes du clavier, et

en ce que, pour la vraie *interrogation* le module protégé applique l'impulsion *prédéterminée* d'une part à toutes les lignes et colonnes sauf une ligne analysée, d'autre part à toutes les lignes et colonne, sauf une colonne analysée, la touche effectivement *interrogée* étant définie par la ligne et la colonne analysées.

10. Unité selon la revendication 9, caractérisée en ce que la touche effectivement explorée est définie de manière sensiblement aléatoire.

11. Unité selon l'une des revendications 9 et 10, caractérisée en ce que les lignes et colonnes sont analysées en alternance.

12. Procédé pour entraver l'interception d'une information frappée sur un clavier, à destination d'un module de traitement de données, caractérisé en ce qu'on simule le faux actionnement de touche en appliquant simultanément le même signal d'interrogation simulée à au moins une ligne et au moins une colonne de la matrice d'analyse du clavier, tandis qu'une vraie exploration du clavier est effectuée, touche par touche, en utilisant à chaque fois une ligne ou colonne recevant le signal d'interrogation et, respectivement, une colonne ou ligne effectivement analysée, qui ne reçoit pas l'impulsion d'interrogation, l'actionnement de la touche explorée produisant le transfert du signal d'interrogation sur la colonne ou ligne analysée, dont l'état est indiscernable des faux actionnements de touche.

## Claims

1. A keyboard security unit, in particular for composing a confidential code, of the type in which a casing (BCL), equipped with a keyboard (2) suitable for matrix analysis by lines and columns, encloses a protected module (1) capable of applying predefined pulses to each of the lines of the keyboard whilst examining the columns of the keyboard, a depressed key producing a specific line-column contact and the pulse transfer to the corresponding column, characterised in that the protected module (1) is equipped with bidirectional links (11) to at least some of the columns and lines of the keyboard, and in that it comprises means for simulating false actuations of keys, at least some of the predefined simulator pulses being applied at the same time to at least one line (a-d) and to at least one column (1-4), which impedes the possibility of interception of the confidential code by monitoring the state of the lines and columns of the keyboard.

2. Unit according to Claim 1, characterised in that the protected module (1) applies each of the predefined pulses to at least one line (a-d) and to at least one column (1-4) in a variable manner, and in that it carries out the real interrogation of the keyboard, key by key, by examining each time a column or line which is actually analysed, to which it does not apply predefined pulses.

3. Unit according to Claim 2, characterised in that the protected module (1) does not carry out any real interrogation of a selected key during a predetermined time corresponding to the normal time for actuation of a key, and in that, during this time, it generates a false response which can be attributed to this selected key, simulator pulses being applied at the same time to the line and to the column corresponding to this key.

4. Unit according to Claim 3, characterised in that the selected key is defined in an essentially random manner.

5. Unit according to one of Claims 2 to 4, characterised in that the protected module (1) responds to the non-transfer of the start of the predefined real interrogation pulse to the analysed column or line, which signifies the non-actuation of one or more examined keys by applying to this column or line a simulator pulse which ends with the predefined pulse.

6. Unit according to one of Claims 2 to 5, characterised in that the protected module (1) is equipped with bidirectional links to all the columns of the keyboard, in that, in a state of pure simulation, the protected module applies the predefined pulse to one line and to all the columns of the keyboard, and in that, for the real interrogation, the protected module applies the predefined pulse to one line and to all the columns except for the one to be analysed, the key which is actually examined being defined by the interrogated line and the analysed column.

7. Unit according to Claim 6, characterised in that the key which is actually interrogated is defined in an essentially random manner.

8. Unit according to Claim 6, characterised in that the protected module (1) applies the predetermined pulse cyclically to the various lines, whereas the column which does not receive the predetermined pulse is determined in an essentially random manner.

9. Unit according to one of Claims 2 to 5, characterised in that the protected module (1) is equipped with bidirectional links both for the lines and for the columns of the keyboard, in that in a state of pure simulation it simultaneously applies the predetermined pulse to all the lines and all the columns of the keyboard, and in that for the real interrogation the protected module applies the predetermined pulse on the one hand to all the lines and columns except for one analysed line, and on the other hand to all the lines and columns except for one analysed column, the key which is actually interrogated being defined by the line and the column analysed.

10. Unit according to Claim 9, characterised in that the key which is actually examined is defined in an essentially random manner.

11. Unit according to one of Claims 9 and 10, characterised in that the lines and columns are analysed alternately.

12. Process for hindering the interception of an item of information which is keyed into a keyboard and destined for a data processing module, characterised in that a false actuation of a key is simulated by simultaneously applying the same interrogation signal to at least one line and at least one column of the analysis matrix of the keyboard, while a real examination of the keyboard is carried out, key by key, using each time a line or column receiving the interrogation signal and, respectively, a column or line actually analysed which does not receive the interrogation pulse, the actuation of the examined key producing the transfer of the interrogation signal to the analysed column or line, the state of which cannot be distinguished from false key actuations.

**Patentansprüche**

1. Sicherheitstastatureinheit, insbesondere für die Zusammensetzung eines vertraulichen Codes, enthaltend ein Gehäuse (BCL) mit einer Tastatur (2) zur matriziellen Analyse in Zeilen und Spalten, das ein geschütztes Modul (1) umschließt, das in der Lage ist, vorbestimmte Impulse an jede der Zeilen der Tastatur zu legen, wobei die Tastaturspalten eingehend geprüft werden, wobei eine gedrückte Taste einen speziellen Zeilen/Spalten-Kontakt und die Übertragung von Impulsen auf die entsprechende Spalte hervorruft, **dadurch gekennzeichnet,** daß das geschützte Modul (1) mit bidirektionalen Verbindungen (11) gegen wenigstens einige Spalten und Zeilen der Tastatur versehen ist und daß es Einrichtungen enthält, um falsche Tastenbetätigungen zu simulieren, wobei wenigstens einige der vorbestimmten, simulierenden Impulse gleichzeitig an wenigstens eine Zeile (a-d) und wenigstens eine Spalte (1-4) angelegt werden, was die Möglichkeit einer Ermittlung des vertraulichen Codes durch Spionage aus dem Zustand der Zeilen und Spalten der Tastatur verhindert.

2. Einheit nach Anspruch 1, **dadurch gekennzeichnet,** daß das geschützte Modul (1) jeden der vorbestimmten Impulse an wenigstens eine Zeile (a-d) und wenigstens eine Spalte (1-4) in variabler Art anlegt und daß es eine Wahrheitsabfrage der Tastatur, Taste für Taste ausführt, indem jedesmal eine effektiv analysierte Spalte oder Zeile genau überprüft wird, an die sie keine vorbestimmten Impulse anlegt.

3. Einheit nach Anspruch 2, **dadurch gekenn-**

zeichnet, daß das geschützte Modul (1) keinerlei Wahrheitsabfrage einer gewählten Taste während einer vorbestimmten Zeit ausführt, die der normalen Betätigungszeit einer Taste entspricht, und daß es gleichzeitig eine falsche Antwort erzeugt, die dieser gewählten Taste zugeordnet ist, wobei Simulationsimpulse gleichzeitig an die Zeile und die Spalte angelegt werden, die dieser Taste entsprechen.

4. Einheit nach Anspruch 3, **dadurch gekennzeichnet,** daß die gewählte Taste im wesentlichen willkürlich definiert ist.

5. Einheit nach einem der Ansprüche 2 bis 4, **dadurch gekennzeichnet,** daß das geschützte Modul (1) auf die Nichtübertragung des Anfangs der vorbestimmten Impulse der Wahrheitsabfrage an der analysierten Spalte oder Zeile anspricht, was die Nichtbetätigung einer oder mehrerer untersuchter Tasten bedeutet, indem an diese Spalte oder Zeile ein Simulationsimpuls angelegt wird, der mit dem vorbestimmten Impuls endet.

6. Einheit nach einem der Ansprüche 2 bis 5, **dadurch gekennzeichnet,** daß das geschützte Modul (1) mit bidirektionalen Verbindungen zu allen Spalten der Tastatur versehen ist, daß im reinen Simulationszustand das geschützte Modul den vorbestimmten Impuls an eine Zeile und an alle Spalten der Tastatur anlegt und daß für die Wahrheitsprüfung des geschützte Modul den vorbestimmten Impuls an eine Leitung und alle Spalten mit Ausnahme der zu analysierenden anlegt, wobei die wirklich geprüfte Taste durch die abgefragte Leitung und die analysierte Spalte definiert wird.

7. Einheit nach Anspruch 6, **dadurch gekennzeichnet,** daß die wirklich abgefragte Taste im wesentlichen willkürlich definiert wird.

8. Einheit nach Anspruch 6, **dadurch gekennzeichnet,** daß das geschützte Modul (1) den vorbestimmten Impuls zyklisch auf verschiedene Leitungen legt, während die Spalte, die den vorbestimmten Impuls nicht empfängt, im wesentlichen willkürlich bestimmt wird.

9. Einheit nach einem der Ansprüche 2 bis 5, **dadurch gekennzeichnet,** daß das geschützte Modul (1) mit bidirektionellen Verbindungen sowohl zu den Leitungen als auch zu den Spalten der Tastatur versehen ist, daß im reinen Simulationszustand es gleichzeitig den vorbestimmten Impuls an alle Zeilen und alle Spalten der Tastatur anlegt, und daß für die Wahrheitsprüfung das geschützte Modul den vorbestimmten Impuls einerseits an alle Zeilen und Spalten mit Ausnahme der analysierten Teile und andererseits an alle Zeilen und Spalten mit Ausnahme einer analysierten Spalte anlegt, wobei die wirklich abgefragte Taste durch die analysierte Zeile und die analysierte Spalte definiert wird.

10. Einheit nach Anspruch 9, **dadurch gekennzeichnet,** daß die wirklich geprüfte Taste im wesentlichen willkürlich definiert wird.

11. Einheit nach einem der Ansprüche 9 und 10, **dadurch gekennzeichnet,** daß die Zeilen und Spalten abwechselnd analysiert werden.

12. Verfahren zum Verhindern Ermittlung einer an einer Tastatur eingegebenen Information für ein Datenverarbeitungsmodul, **dadurch gekennzeichnet,** daß man die fehlerhafte Tastenbetätigung simuliert, indem man gleichzeitig das gleiche simulierte Abfragesignal an wenigstens eine Zeile und wenigstens eine Spalte der Matrix zur Analyse der Tastatur anlegt, während eine Wahrheitsprüfung der Tastatur Taste für Taste ausgeführt wird, indem bei jedem Mal eine Zeile oder Spalte, die das Abfragesignal erhält und entsprechend eine wirklich analysierte Spalte oder Zeile, die den Abfrageimpuls nicht erhält, verwendet werden, wobei die Betätigung der geprüften Taste die Übertragung des Abfragesignals auf die analysierte Spalte oder Zeile erzeugt, deren Zustand von falschen Tastenbetätigungen nicht zu unterschieden ist.

## FIG. 1

## FIG. 2

FIG. 3

FIG. 4

b3    SIGNAUX LORS D'UNE ACTION
SUR TOUCHE 5 (CONTACT b3)

FIG.5

TOUCHES
EXPLOREES
NON ENFONCEES

TOUCHE
EXPLOREE
ENFONCEE

TOUCHE
SIMULEE (ET
NON EXPLOREE

dx...
(ici d2)

a

b

c

d

1

2

3

4

TOUCHES
EXPLOREES    2  d  b  4    2        d  2          3
NON ENFONCEES

TOUCHE
EXPLOREE
ENFONCEE (ici b4)                    b    b    4    4

TOUCHE
SIMULEE ET              x        y
NON EXPLOREE (ici b2)

LECTURE AVEC GENERATION
DE "FAUX" CONTACTS

FIG.6

## FIG. 5A

DECISION SUR LA TOUCHE
A SIMULER. p. ex : d 2 — 50

ENVOI DE L'IMPULSION D'
INTERROGATION A L'UNE
DES LIGNES a, b, c, d,
CYCLIQUEMENT — 51

52 — LIGNE d
ET MOMENT VENU
POUR SIMULATION
? — OUI

53 — ENVOYER AUSSI L'IM-
PULSION D'INTERROGA
TION SUR TOUTES LES
COLONNES 1, 2, 3, 4

NON

54 — CHOISIR UNE TOUCHE A EXPLORER
SUR LA LIGNE EN COURS, EN
EXCLUANT LA TOUCHE SIMULEE, ET
LES TOUCHES RECEMMENT
EXPLOREES

ENVOYER AUSSI L'IMPULSION
D'INTERROGATION A TOUTES LES
COLONNES, SAUF CELLE DE LA
TOUCHE A EXPLORER — 55

56 — DEBUT DE
L'IMPULSION D'INTER-
ROGATION PRESENT SUR
LA COLONNE DE LA TOUCHE
A EXPLORER ? — OUI

57 — VALIDER ACTION-
NEMENT DE LA
TOUCHE EXPLOREE

NON

APPLIQUER IMPULSION FACTICE
SUR LA COLONNE DE LA TOUCHE
EXPLOREE — 58

NON — TEMPORISATION DE
SIMULATION ECOULEE ? — 59

OUI

16

## FIG. 6A

DECISION SUR LA TOUCHE
A SIMULER p. ex. b2 ⌐60

MOMENT VENU
POUR SIMULATION ? ⌐61 —OUI→ ENVOYER L'IM-
PULSION D'INT-
ERROGATION A
TOUTES LES LIG-
NES ET TOUTES
LES COLONNES ⌐62

NON

CHOISIR UNE TOUCHE A
EXPLORER, EN EXCLUANT
LA TOUCHE SIMULEE, ET LES
TOUCHES RECEMMENT
EXPLOREES (SANS SUCCES) ⌐63

ENVOYER L'IMPULSION D'INT-
ERROGATION A TOUTES LIGNES
ET COLONNES SAUF LA LIGNE
(OU COLONNE) DE LA TOUCHE
A EXPLORER ⌐64

APPLIQUER
IMPULSION
FACTICE SUR
LA LIGNE(OU
COLONNE)EN
QUESTION ⌐66 ←NON— DEBUT DE
L'IMPULSION D'INTERROGATION
PRESENT SUR LA LIGNE(OU
COLONNE) EN QUESTION ? ⌐65 —OUI→ MEMORISER LA
LIGNE (OU
COLONNE) ⌐67

ENVOYER L'IMPULSION D'INT-
ERROGATION A TOUTES LIGNES
ET COLONNES SAUF LA COLONNE
(OU LIGNE) DE LA TOUCHE A
EXPLORER ⌐68

APPLIQUER
IMPULSION
FACTICE SUR
LA COLONNE
(OU LA LIGNE)
EN QUESTION ⌐70 ←NON— DEBUT DE
L'IMPULSION D'INTERROGATION
PRESENT SUR LA COLONNE (OU
LIGNE)EN QUESTION ? ⌐69 —OUI→ VALIDER
ACTIONNEMENT
DE LA TOUCHE
DEFINIE PAR LA
LIGNE OU COLON-
NE EN QUESTION ⌐71

TEMPORISATION
DE SIMULATION ECOULEE ? ⌐72

NON←

OUI